# EUROPEAN PATENT APPLICATION

(11) **EP 3 753 725 A1**
(43) Date of publication of application: **23.12.2020**
(21) Application number: 19181003.5
(22) Date of filing: 18.06.2019
(51) Int. Cl.: B32B 1/08, B32B 5/16, B32B 7/02, B32B 19/02, B32B 19/04, B32B 27/08, B32B 27/20, B32B 27/30, B32B 27/32, B32B 27/34, F16L 9/00

(54) **A MULTILAYER PIPE**

(71) Applicant: Spyra Primo Poland Sp. z o.o., 43-190 Mikolów (PL)
(72) Inventor: SPYRA, Czeslaw, 43-190 Mikolów (PL)
(74) Representative: Malcherek, Piotr

(57) **Abstract**

The invention relates to a multilayer pipe (1) designed for laying in particular underwater. The pipe (1) has a wall comprising at least two layers (2, 3) made of polymer material, and the polymer material one chosen layer is made of, preferably the outer layer (3), contains additives in the form of metallic powders, or chemical compounds of metal or mineral substances so that it forms a mixture with the density at least twice higher than the density of the polymer material which the other layer or layers is made of, and the total density of the pipe is higher than or equals at least 1.2 g/cm³.

## Description

The invention refers to a multilayer pipe, and more specifically a pipe whose layers are made of various polymer materials.

### State of the art

The Polish patent PL166747 discloses a multilayer pipe with a tubular core coated with an adhesive layer, preferably polyurethane or epoxy resin, with a laminated coating applied thereon. The laminated coating consists of at least one inner layer made of fiberglass saturated with a polyester chemo-setting composition that includes self-extinguishing non-saturated polyester resin in an amount of 100 parts by weight, at least one flame retardant, preferably a salt and/or an ester of phosphoric acids in an amount up to 20 parts by weight, an antistatic admixture in an amount from 3 to 5 parts by weight and catalysts, and at least one glass fiber outer layer saturated with a polyester chemo-set composition containing a self-extinguishing unsaturated polyester resin in an amount of 100 parts by weight, at least one antipyrene, preferably a salt and / or an phosphoric ester acids in an amount of up to 20 parts by weight, an antistatic in an amount of 3 to 5 parts by weight, catalysts and conductive carbon black and / or magnetite dust in an amount of 5 to 15 parts by weight.

A pipe with a different design is known from the Polish patent PL206604. The pipe disclosed in that document is preferably intended for industrial applications and is equipped with a tubular core made of thermoplastic material with admixture of flame retardants and antistatic agents. The tubular core includes reinforcing elements having the form of at least two mutually independent sets, where one is a radial reinforcement set whilst the second one is a longitudinal reinforcement.

In addition, the current state-of-the-art, for instance WO 94/19639 A1, reports submersible pipes designed for gas transfer that can be used at various depth from 60 meters up to 500 meters or even. Such submersible pipe is made up of multiple layers, where the first inner layer is made of steel and the outer layer is made mainly of concrete, which is responsible for submersibility of the pipe and provides necessary load making it possible to lay a pipeline on sea or ocean bottom. While laying, the pipes are connected one to another to make up a pipeline, by welding the inner layer and making the outer layer using concreate. The concrete layer has spaces filled with a lightweight material made of plastic susceptible to compression, for instance high density polyethylene foam with closed cells. Application of an additive made of plastics makes it possible to avoid cracking of pipes caused by excessive weight of such pipes. Upon having the pipeline sections submerged water can penetrate through a permeable concrete layer and, additionally, due to high ambient pressures at high depths compresses the filling made of plastics. Void spaces in concrete formed in this way are filled with water additionally increasing the weight of such pipes and improving the stability of a pipeline after its installation. A pipe designed for pipelines to be submerged to the depth of 150 meters below sea level has the following parameters: inner diameter of the steel pipe - 100 cm, the wall thickness for the internal steel pipe - 2.5 cm, thickness of the outer layer - 14.3 cm, the ratio of plastic filling material to concrete - 1:1, an average unit weight of the pipeline between the sea surface and sea bottom - 211 kg/m, an average unit weight of a pipeline laid down on the sea bottom - 328 kg/m.

### Objective and essence of the invention

The invention consists in the development of a structure for a multilayer pipe made of polymer materials with a simple and uncomplicated structure to make it easy to install the pipeline under water while assuring a quick and efficient pipe connecting. Other objectives of the invention are to assure high strength of pipes, their easy transportation and storage.

The invention relates to a multilayer pipe with wall including at least two layers made of polymer material according to the preamble of the independent claim no. 1. The essence of the invention consists in the fact that the polymer material which is used to make one, chosen layer contains additives, having the form of metallic powders, or chemical compounds of metals or mineral additives so that the mixture with the foregoing additives has the density at least twice higher than the density of the polymer material that is used to manufacture the other layer or layers, and the total density of the pipe is higher or equal 1,2 g/cm³.

In the preferred embodiment of the invention the thickness of the layer made of a polymer material forming the mixture with the higher density is from 0,01 to 0.3 of the total pipe wall thickness, the most preferred being from 0.1 to 0.2 of the pipe wall thickness.

It is desirable to use additives like metallic powders or chemical compounds of metals with such a granulation where the grain size ranges from 5 - 100µm.

Rolling scale, ferrosilicon, nichrome, or iron and its alloys or tungsten are most preferably used as metallic powders or chemical compounds of metals.

As mineral additive it is best to use basalt or zirconium, preferably within the range from 50% to 90% by volume.

It is also preferred when the layer made of mixture with the higher density makes up the outer layer of the pipe.

### Advantages of the invention

The application of the invention makes it possible to produce pipes with high strength and flexibility that can be coiled on spools with simultaneous ability to self submerge with no need to use any additional equipment or appliances. It facilitates transportation and storage of pipes as well as an easy assembly of pipelines and the way of connecting adjoining pipes with the use of methods already known for pipes made of polymer materials, for instance plastic welding, bolting, using or not using flanges.

### Embodiments of the invention

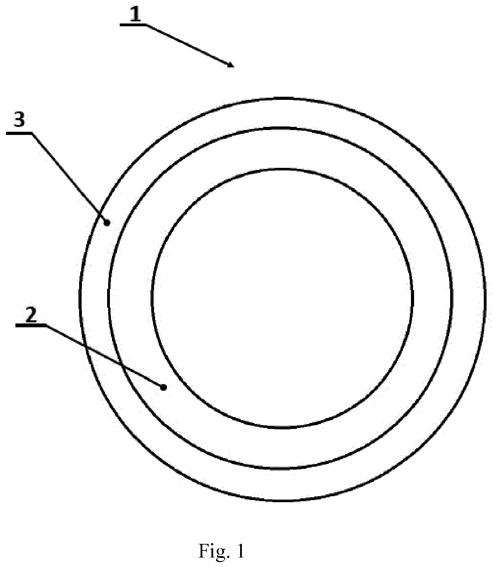

The invention is explained on the following embodiments and on the attached drawing which shows the cross-section diagram of the pipe.

For all the following embodiments the pipe 1 comprises a wall with two layers - the inner layer 2 and the outer layer 3. The polymer material one, chosen layer of the pipe is made of contains additives in the form of metallic powders or chemical compounds of metals or mineral additives so that the resulting mixture has the density at least twice higher than the density of the other layer and the total density of the pipe is higher or equals 1,2 g/cm³.

In case a pipe wall include more layers, the polymer material one, chosen layer of the pipe is made of contains additives in the form of metallic powders or chemical compounds of metals or mineral additives so that the resulting mixture has the density at least twice higher than the average density of the other layers, and the total density of the pipe is higher or equals 1,2 g/cm³.

Pipe 1, in addition to the above described layers, may include more layers, but the provision relating to the density of the entire pipe must be fulfilled. Such a pipe can be provided with flanges at its both ends, and also can include inner reinforcements. The pipe can be manufactured by extrusion and the pipe wall layers are mutually connected. Moreover, it is preferred when the layer with the higher density is the outer layer of the pipe wall. In such a case a thin protective polymer material layer can be located outside the surface of the pipe. Moreover, the layer made of the mixture with the higher density can be also the inner layer of the pipe wall.

### Embodiment 1

The inner layer is made of polymer material: polypropylene with the density of 0.91 g/cm³ with 100% volume content of that material in the inner layer.

The outer layer is made of a polymer material with additives: polypropylene with the density of 0.91 g/cm³ - the content of 24.5% per volume, polypropylene modified with maleic anhydride - density of 0.96 g/cm³, the content of 5% per volume, nichrome with the density of 8.0 g/cm³ and granulation of 40 µm, the content of 70% per volume in the layer, polyethylene wax with the density of 1.00 g/cm³ - the content of 0.5% per volume in the layer. The average density of the mixture is 5.88 g/cm³.

### Embodiment 2

The inner layer of the pipe wall is made of a polymer material: high density polyethylene (HDPE) with the density of 0.94 g/cm³ and its content is 95% per volume, polyethylene modified with maleic anhydride with the density of 0.98 g/cm³ and the content of 5% per volume in that layer. The average density of the mixture is 0.94 g/cm³. The outer layer comprises of a polymer material with the following additives: poly(ethylene-co-vinyl acetate) with the density of 0.94 g/cm³ and the content of 20% per volume, ferrosilicon with the density of 4.9 g/cm³, granulation of 70 µm and the content of 80% per volume in that layer, polyethylene wax with the density of 1.00 g/cm³ and the content of 0.5% per volume in the layer. The average density of the mixture is 4.11 g/cm³.

### Embodiment 3

The inner layer is made of a polymer material: linear low-pressure polyethylene with the density of 0.91 g/cm³ and 100% volume content in the layer.

The outer layer comprises of a polymer material with additives: linear low-pressure polyethylene with the density of 0.91 g/cm³ and the content of 29.5% per volume, basalt with the density of 2.96 g/cm³, granulation of 30 µm and the content of 70% per volume in the layer, polyethylene wax with the density of 1.00 g/cm³ and the content of 0.5% per volume in the layer. The average density of the mixture is 2.34 g/cm³.

### Embodiment 4

The inner layer of the pipe wall is made of a polymer material: high density polyethylene (HDPE) with the density of 0.94 g/cm³ and the content of 95% per volume, polyethylene modified with maleic anhydride with the density of 0.98 g/cm³ and the content of 5% per volume in the layer. The average density of the mixture is 0.94 g/cm³. The outer layer comprises a polymer material with additives: linear low-pressure polyethylene with the density of 0,91 g/cm³ and the content of 24.5% per volume, polyethylene modified with maleic anhydride with the density of 0.93 g/cm³ and the content of 5% per volume in the layer, rolling scale with the density of 5.1 g/cm³, granulation of 80 µm and the content of 70% per volume, polyethylene wax with the density of 1.00 g/cm³ and the content 0.5% per volume in the layer. The average density of the mixture is 3.9 g/cm³.

### Embodiment 5

The inner layer of the pipe wall is made of a polymer material: high density polyethylene (HDPE) with the density of 0.94 g/cm³ and the content of 95% per volume, polyethylene modified with maleic anhydride with the density of 0.98 g/cm³ and the content of 5% per volume in the layer. The average density of mixture is 0.94 g/cm³. The outer layer comprises a polymer material with additives: linear low-pressure polyethylene with the density of 0,91 g/cm³ and the content of 34.5% pr volume, polyethylene modified with maleic anhydride with the density of 0.92 g/cm³ and the content of 5% per volume, tungsten with the density of 19.0 g/cm³, granulation of 80 µm and the content of 60% per volume, polyethylene wax with the density of 1.00 g/cm³ and the content of 0.5% per volume in the layer. The average density of the mixture is 11.8 g/cm³.

### Embodiment 6

The inner layer is fully made of polymer material: polyamide PA11 with the density of 1.03 g/cm³ and the volume content of 100% in the layer.

The outer layer comprises a polymer material with additives: polyethylene with the density of 0,91 g/cm³ and the content of 24.5% per volume, polyethylene modified with maleic anhydride with the density of 0.92 g/cm³ and the content of 5% per volume, zirconium with the density of 4.6 g/cm³, granulation of 80 µm and the content of 70% per volume, polyethylene wax with the density of 1.00 g/cm³ and the content of 0.5% per volume in the layer. The average density of the mixture is 3.5 g/cm³.

### Embodiment 7

The inner layer is fully made of polymer material: polypropylene with the density of 0.91 g/cm³ and the volume content of 100% in the layer. The outer layer comprises a polymer material with additives: polypropylene with the density of 0,91 g/cm³ and the content of 24.4% per volume, polypropylene modified with maleic anhydride with the density of 0.96 g/cm³ and the content of 5% per volume, ferromolybdenum (iron alloy) with the density of 7.9 g/cm³, granulation of 80 µm and the content of 70% per volume, polyethylene wax with the density of 1.00 g/cm³ and the content of 0.5% per volume in the layer. The average density of the mixture is 5.8 g/cm³.

### Embodiment 8

The inner layer is made of polymer material: high density polyethylene (HDPE) with the density of 0.94 g/cm³ and the content of 95% per volume, polyethylene modified with maleic anhydride with the density of 0.98 g/cm³ and the content of 5% per volume. The average density of the mixture is 0.94 g/cm³.

The outer layer comprises a polymer material with additives: linear low-pressure polyethylene with the density of 0,91 g/cm³ and the content of 83% per volume, polyethylene modified with maleic anhydride with the density of 0.92 g/cm³ and the content of 5% per volume, tungsten with the density of 19.0 g/cm³, granulation of 80 µm and the content of 12% per volume, polyethylene wax with the density of 1.00 g/cm³ and the content of 0.5% per volume in the layer. The average density of the mixture is 2.32 g/cm³.

The table below shows the parameters of pipes concerning the above embodiments of the invention.

| | EMBODIMENTS | | | | | | | |
|---|---|---|---|---|---|---|---|---|
| | **1** | **2** | **3** | **4** | **5** | **6** | **7** | **8** |
| Density of the layer made of polymer material [g/cm³] | 0,91 | 0,94 | 0,91 | 0,94 | 0,94 | 1,03 | 0,91 | 0,94 |
| Density of the layer made of polymer material with additives [g/cm³] | 5,88 | 4,11 | 2,94 | 3,90 | 11,80 | 3,50 | 5,80 | 2,32 |
| Total density [g/cm3] | 1,40 | 1,30 | 1,30 | 1,30 | 1,25 | 1,40 | 1,40 | 1,23 |

| Dimensional group 1, according to the following parameters | | | | | | | | |
|---|---|---|---|---|---|---|---|---|
| Inner diameter (mm) | 66,00 | 66,00 | 246,80 | 246,80 | 141,00 | 141,00 | 110,20 | 311,60 |
| Outer diameter of the inner pipe made up of polymer material (mm) | 75,00 | 75,00 | 280,00 | 280,00 | 160,00 | 160,00 | 125,00 | 355,00 |
| Total outer diameter of the pipe (mm) | 76,01 | 76,14 | 292,59 | 284,56 | 160,56 | 163,03 | 126,69 | 366,35 |
| Thickness of the layer made of polymer material (mm) | 4,50 | 4,50 | 16,60 | 16,60 | 9,50 | 9,50 | 7,40 | 21,70 |
| Thickness of the layer made of polymer material with additives (mm) | 0,51 | 0,57 | 6,29 | 2,28 | 0,28 | 1,51 | 0,85 | 5,68 |
| Total thickness of the pipe wall (mm) | 5,01 | 5,07 | 22,89 | 18,88 | 9,78 | 11,01 | 8,25 | 27,38 |
| Ratio of the thickness of layer made up of polymer material with additives to the total thickness of the pipe wall | 0,10 | 0,11 | 0,27 | 0,12 | 0,03 | 0,14 | 0,10 | 0,21 |

| Dimensional group 2, according to the following parameters | | | | | | | | |
|---|---|---|---|---|---|---|---|---|
| Inner diameter (mm) | 63,80 | 63,80 | 136,40 | 136,40 | 238,80 | 238,80 | 106,60 | 302,80 |
| Outer diameter of the inner pipe made up of polymer material (mm) | 75,00 | 75,00 | 160,00 | 160,00 | 280,00 | 280,00 | 125,00 | 355,00 |
| Total outer diameter of the pipe (mm) | 76,24 | 76,40 | 165,61 | 163,19 | 281,19 | 286,45 | 127,07 | 368,43 |
| Thickness of the layer made of polymer material (mm) | 5,60 | 5,60 | 11,80 | 11,80 | 20,60 | 20,60 | 9,20 | 26,10 |
| Thickness of the layer made of polymer material with additives (mm) | 0,62 | 0,70 | 2,81 | 1,59 | 0,60 | 3,23 | 1,03 | 6,72 |
| Total thickness of the pipe wall (mm) | 6,22 | 6,30 | 14,61 | 13,39 | 21,20 | 23,83 | 10,23 | 32,82 |
| Ratio of the thickness of layer made up of polymer material with additives to the total thickness of the pipe wall | 0,10 | 0,11 | 0,19 | 0,12 | 0,03 | 0,14 | 0,10 | 0,20 |

| Dimensional group 3, according to the following parameters | | | | | | | | |
|---|---|---|---|---|---|---|---|---|
| Inner diameter (mm) | 58,20 | 58,20 | 124,20 | 124,20 | 217,40 | 217,40 | 97,00 | 275,60 |
| Outer diameter of the inner pipe made up of polymer material (mm) | 75,00 | 75,00 | 160,00 | 160,00 | 280,00 | 280,00 | 125,00 | 355,00 |
| Total outer diameter of the pipe (mm) | 76,77 | 77,01 | 168,10 | 164,62 | 281,73 | 289,35 | 128,01 | 374,43 |
| Thickness of the layer made of polymer material (mm) | 8,40 | 8,40 | 17,90 | 17,90 | 31,30 | 31,30 | 14,00 | 39,70 |
| Thickness of the layer made of polymer material with additives (mm) | 0,89 | 1,00 | 4,05 | 2,31 | 0,87 | 4,68 | 1,50 | 9,71 |
| Total thickness of the pipe wall (mm) | 9,29 | 9,40 | 21,95 | 20,21 | 32,17 | 35,98 | 15,50 | 49,41 |
| Ratio of the thickness of layer made up of polymer material with additives to the total thickness of the pipe wall | 0,10 | 0,11 | 0,18 | 0,11 | 0,03 | 0,13 | 0,10 | 0,20 |

## Claims

1. Multilayer pipe (1), with a wall comprising at least two layers (2,3) made of polymer material, **characterized in that** the polymer material which one chosen layer is made of contains additives in the form of metallic powders, or chemical compounds of metal or mineral substances so that it forms a mixture with the density at least twice higher than the density of the polymer material which the other layer or layers is made of, and the total density of the pipe is higher or equals 1,2 g/cm³.

2. The multilayer pipe (1) according to claim 1, **characterized in that** the thickness of the layer made of a polymer material forming the mixture with the higher density is from 0,01 to 0.3 of the total pipe wall thickness, the most preferred being from 0.1 to 0.2 of the pipe wall thickness.

3. The multilayer pipe (1) according to claim 1 or 2, **characterized in that** the metallic powders or chemical compounds being additives have the granulation of the gain size from 5 to 100 µm.

4. The multilayer pipe (1) according to one of claims from 1 to 3, **characterized in that** rolling scale, ferrosilicon, nichrome, iron and its alloys or tungsten are used as additives.

5. The multilayer pipe (1) according to claim 1 or 2, **characterized in that** basalt or zirconium are used as mineral additives, preferably in the range from 50% to 90% per volume.

6. The multilayer pipe (1) according to one of the claims from 1 to 5, **characterized in that** the layer made of the mixture with the higher density constitutes the outer layer (3) of the pipe wall.
